# FASCICULE DE BREVET EUROPEEN

(11) **EP 2 149 256 B1**
(45) Date de publication et mention de la délivrance du brevet: **04.04.2018**
(21) Numéro de dépôt: 08805875.5
(22) Date de dépôt: 28.05.2008
(51) Int. Cl.: H04N 5/445

(54) **GENERATION D'UNE MOSAIQUE TV PERSONNALISABLE**
ERZEUGUNG EINES EINSTELLBAREN TV-MOSAIKS
GENERATION OF CUSTOMISABLE TV MOSAIC

(30) Priorité: 30.05.2007 FR 0755333
(43) Date de publication de la demande: 03.02.2010
(73) Titulaire: Orange, 75015 Paris (FR)
(72) Inventeur: CASTELLAN, Pierre-Yves, F-35000 Rennes (FR); LEPOIL, Elisabeth, F-35135 Chantepie (FR); CHATELIER, Laurent, F-35850 Geveze (FR)
(74) Mandataire: Cabinet Plasseraud
(86) Numéro de dépôt international: PCT/FR2008/050931
(87) Numéro de publication internationale: WO 2008/152303

(56) Documents cités:
- EP-A- 1 233 614
- WO-A-01/56293
- WO-A-01/74051
- FR-A- 2 813 693
- US-A- 5 978 043

## Description

La présente invention concerne le domaine des récepteurs de flux de contenus, par exemple des récepteurs de programmes télévisuels. Un tel récepteur reçoit des flux de données comportant des programmes télévisuels, les décode, puis les fournit à un dispositif d'affichage qui, suivant les cas, est intégré ou non au récepteur.

Suite notamment à l'apparition de la télévision numérique, le nombre de chaînes de télévision (TV) proposées à l'utilisateur d'un récepteur TV a considérablement augmenté.

Les mosaïques TV permettent à l'utilisateur d'un récepteur TV de visualiser plus rapidement l'ensemble des programmes TV actuellement diffusés sur les différentes chaînes, sans avoir à consulter autant d'écrans que de chaînes disponibles.

On considère ici les mosaïques présentant des éléments mosaïques juxtaposés tels que chaque élément mosaïque permet de visualiser, en un format réduit, un flux de contenus, par exemple un programme TV, en cours de diffusion sur une chaîne associé à l'élément mosaïque. Ainsi lorsqu'une mosaïque est affichée par le dispositif d'affichage, l'utilisateur visualise sur un même écran un ensemble des programmes diffusés par les chaînes associées aux éléments mosaïques de la mosaïque.

Le signal vidéo visualisé par l'intermédiaire d'un élément mosaïque d'une mosaïque est généralement obtenu par sous-échantillonnage du signal vidéo correspondant au programme.

Généralement, le fournisseur de bouquets de chaînes TV détermine préalablement les N chaînes qui apparaîtront sous forme réduite sur une mosaïque donnée (par exemple, N est égal à 20 et la mosaïque comprend quatre rangs horizontaux d'éléments mosaïques, chaque rang comportant cinq éléments mosaïques).

Le signal vidéo correspondant à chaque programme en cours de diffusion sur chacune des N chaînes est tout d'abord sous-échantillonné. Un flux de programme mosaïque est ensuite constitué en fonction des signaux vidéos sous-échantillonnés. Ce flux de programme correspond à l'écran mosaïque des N éléments mosaïques juxtaposés, chacun affichant en modèle réduit le programme en cours de diffusion d'une chaîne respective. Ce flux de programme mosaïque est ensuite diffusé par le fournisseur de bouquets à destination des récepteurs de télévisions, en parallèle de la diffusion des flux comprenant les signaux vidéo d'origine correspondant aux programmes en cours de diffusion sur les chaînes.

Lorsqu'un fournisseur de bouquets de chaînes TV diffuse un nombre de chaînes supérieur au nombre d'éléments mosaïques juxtaposables sur un écran de mosaïque (il faut en effet que la taille d'un élément mosaïque ne soit pas trop petite afin qu'il soit visualisable lorsque la mosaïque est affichée sur un écran TV), il diffuse alors plusieurs mosaïques.

Lorsqu'un utilisateur est abonné à plusieurs fournisseurs de bouquets, il reçoit également plusieurs mosaïques correspondant aux fournisseurs respectifs.

L'utilisateur est ainsi amené à devoir afficher successivement plusieurs mosaïques afin consulter les programmes diffusés sur ses chaînes préférées, ce qui est fastidieux.

En outre, la composition de chaque mosaïque est déterminée par l'opérateur de bouquets de chaînes TV et ne correspond pas toujours aux besoins des utilisateurs.

Le document WO 2006/081577 décrit un guide électronique de programmes composé de mosaïques de flux vidéo dynamique capable d'intégrer des métadonnées de sources différentes et personnalisable. Notamment, il propose une mosaïque dite "favoris" qui intègre dynamiquement des flux vidéo correspondant aux préférences de l'utilisateur. En outre, l'utilisateur peut introduire d'autres sources de flux vidéo que celle du fournisseur de service vidéo, qui seront prises en compte lors de la génération du guide électronique de programmes. La mosaïque est générée par le système de manière à satisfaire les critères de préférences de l'utilisateur. Le système de personnalisation ainsi proposé peut se révéler complexe suivant le nombre et la finesse des critères de préférences et le nombre de flux vidéo à disposition.

Le document D1 EP 1 233 614 décrit une génération de mosaïque de flux transportant des contenus sur un écran 502 comprenant une zone d'affichage de la mosaïque 505 à 507, et une zone d'affichage de menu 504 proposant un choix de genre de programme TV.

Le document WO 01/74051 décrit un affichage d'une page comprenant plusieurs fenêtres sur un même écran tel qu'une mosaïque.

Le document FR 2 813 693 divulgue un affichage de plusieurs fenêtres sur un même écran formant une mosaïque. Les programmes du bouquet de chaînes dont dispose l'utilisateur lui sont indiqués sous la forme d'un bandeau défilant.

Le document WO 01/56293 divulgue un affichage de plusieurs fenêtres sur un même écran.

Suivant un premier aspect, l'invention propose un procédé de génération d'au moins une mosaïque de flux transportant des contenus.

Le procédé comprend les étapes suivantes, suite à l'affichage d'un écran comprenant au moins une première zone destinée à l'affichage d'une mosaïque et une deuxième zone comportant une liste d'identifiants de contenus :
a/ détecter une commande de sélection d'un identifiant de la liste en provenance d'une interface de commande d'un utilisateur ;
b/ modifier la définition de l'écran en ajoutant un élément mosaïque présentant le flux représentant le contenu identifié par l'identifiant sélectionné ;
c/ transmettre les données de définition de l'écran au dispositif d'affichage pour affichage de l'écran modifié.

Ainsi le processus pour permettre à un utilisateur de définir tout ou partie du contenu de la mosaïque est rapide, simple et pratique.

Sur un même écran sont visualisées à la fois la mosaïque et une liste d'identifiants de contenus disponibles pour affichage de l'élément mosaïque correspondant dans la mosaïque.

L'utilisateur dispose ainsi sur un même écran de l'ensemble des éléments pour définir sa mosaïque. Dès sélection d'un identifiant de contenu dans la deuxième zone de l'écran, il peut visualiser sur le même écran dans la première zone, sa mosaïque mise à jour, comprenant un nouvel élément mosaïque correspondant au contenu sélectionné.

Un tel procédé permet ainsi à un utilisateur de définir lui-même, en très peu de temps et avec très peu d'opérations nécessaires, tout ou partie d'une mosaïque et choisir de faire figurer sur une même mosaïque tout ou partie de ses chaînes préférées. On tend par chaîne tant les chaînes TV que les stations radios ou autres entités émettrices de programmes multimédias.

Dans un mode de réalisation, la commande indiquant en outre un emplacement déterminé dans la première zone, la définition de l'écran est modifiée en ajoutant un élément mosaïque dans la première zone, présentant le flux représentant le contenu identifié par l'identifiant sélectionné à l'emplacement indiqué.

Une telle disposition permet ainsi l'affichage, à un emplacement de la première zone défini par l'utilisateur, d'un élément mosaïque présentant le flux représentant le contenu qu'il a sélectionné. Il définit ainsi l'élément mosaïque de son choix à l'emplacement de son choix.

Dans un mode de réalisation, la commande indique en outre un déplacement depuis l'identifiant sélectionné dans la liste jusqu'à un emplacement déterminé dans la première zone. La définition de l'écran est alors modifiée successivement en ajoutant une représentation de l'identifiant sélectionné et en la déplaçant en des positions respectives successives le long du déplacement indiqué. Les données de définition de l'écran sont transmises au dispositif d'affichage pour affichage de l'écran successivement modifié.

Une telle disposition permet à l'utilisateur de visualiser sur l'écran, au fur et à mesure du déplacement indiqué à l'aide de l'interface de commande, le déplacement correspondant de la représentation de l'identifiant, avant de choisir l'emplacement définitif auquel l'utilisateur souhaite disposer l'élément mosaïque correspondant au contenu identifié par l'identifiant.

Dans un mode de réalisation, le procédé comporte une étape préalable de détermination, parmi les contenus, de ceux autorisés à être visualisés, les identifiants de la liste à afficher dans la deuxième zone étant les identifiants de contenus déterminés.

Dans un mode de réalisation, suite à la détection d'au moins une commande en provenance de l'interface de commande, indiquant un défilement dans un sens donné de la liste d'identifiants, le procédé met en oeuvre les étapes suivantes :
- la définition de l'écran est modifiée en supprimant au moins un identifiant de contenu précédemment affiché à une extrémité de la liste dans la deuxième zone et en ajoutant au moins un identifiant de contenu non précédemment affiché dans la liste à une autre extrémité de la liste ;
- les données de définition de l'écran sont transmises au dispositif d'affichage pour affichage de l'écran modifié.

Ainsi lorsque de nombreuses chaînes sont disponibles, l'utilisateur peut ainsi visualiser sur un même écran la mosaïque et l'ensemble des identifiants de chaînes, au fur et à mesure du déroulement de la liste.

Dans un mode de réalisation, le procédé comprend en outre les étapes suivantes:
- détecter une commande, en provenance de l'interface de commande, indiquant un contenu représenté dans un élément mosaïque sur l'écran affiché;
- modifier la définition de l'écran en supprimant au moins l'élément mosaïque représentant le contenu indiqué dans la première zone ;
- transmettre les données de définition de l'écran au dispositif d'affichage pour affichage de l'écran modifié.

Cette disposition permet, tout en continuant à visualiser la mosaïque, d'en modifier son contenu, ici en supprimant un élément mosaïque précédemment inclus dans la mosaïque.

Dans un mode de réalisation, le procédé comprend en outre les étapes suivantes :
- détecter une commande, en provenance de l'interface de commande, sélectionnant un élément mosaïque situé à un premier emplacement déterminé dans la première zone et indiquant un déplacement depuis le premier emplacement jusqu'à un second emplacement dans la première zone ;
- modifier successivement la définition de l'écran en déplaçant l'élément mosaïque sélectionné en des positions respectives successives de le long du déplacement indiqué ; et
- transmettre les données de définition de l'écran au dispositif d'affichage pour affichage de l'écran successivement modifié.

Cette disposition permet, tout en continuant à visualiser la mosaïque, d'en modifier son contenu, ici en déplaçant un élément mosaïque de la mosaïque vers un nouvel emplacement dans la mosaïque.

Suivant un second aspect, l'invention propose un programme d'ordinateur à installer dans un module apte à recevoir des flux transportant des contenus, apte à recevoir des commandes transmises depuis une interface de commande et apte à envoyer des données de définition d'écran à un dispositif d'affichage pour affichage de l'écran ainsi défini, ledit programme comprenant des instructions pour mettre en oeuvre les étapes d'un procédé suivant le premier aspect de l'invention lors d'une exécution du programme par des moyens de traitement dudit module.

Suivant un troisième aspect, l'invention propose un module apte à recevoir des flux transportant des contenus, apte à recevoir des commandes transmises depuis une interface de commande et apte à envoyer des données de définition d'écran à un dispositif d'affichage pour affichage dudit écran, ledit module étant adapté pour mettre en oeuvre les étapes d'un procédé suivant le premier aspect de l'invention.

Suivant un quatrième aspect, l'invention propose un récepteur télévisuel comportant un module suivant le troisième aspect de l'invention.

Suivant un cinquième aspect, l'invention propose un écran comprenant au moins une première zone destinée à l'affichage d'une mosaïque de flux transportant des contenus et une deuxième zone comportant une liste d'identifiants de contenus, ledit écran étant obtenu suite à la mise en oeuvre d'un procédé suivant le premier aspect de l'invention.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente un système dans un mode de réalisation de l'invention ;
- la figure 2 représente un téléviseur dans un mode de réalisation de l'invention ;
- les figures 3.1 à 3.4 représentent des écrans dans un mode de réalisation de l'invention.

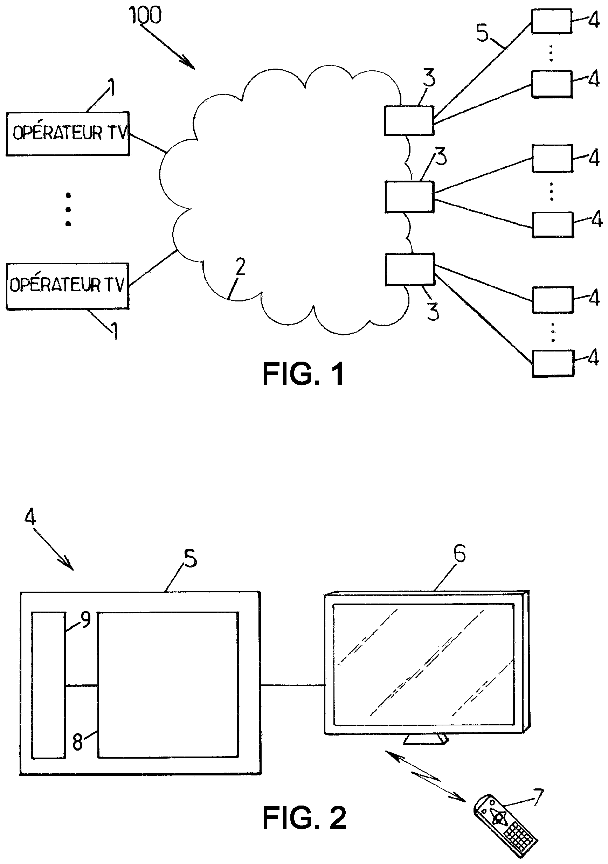

La figure 1 représente un système 100 comprenant un ou plusieurs diffuseurs de contenus 1 tels que des opérateurs de télévision, un réseau de transport 2 et des systèmes de réception et représentation 4, notamment des téléviseurs dans notre exemple. Le réseau de transport est dans notre exemple le réseau ADSL. D'autres réseaux peuvent être envisagés tels qu'Internet, le réseau satellite, hertzien, radio, câble, fibre optique etc.

Dans un mode de réalisation, le réseau de transport 2 comporte des équipements 3, notamment des démodulateurs comme ceux utilisés par les modems Wifi, ADSL etc., reliés aux téléviseurs 4.

Par exemple les équipements 3 sont de type modem ADSL, encore nommé multiplexeur d'accès de ligne d'abonné numérique ou DSLAM (en anglais « Digital Subscriber Line Access Multiplexer ») et ils sont reliés aux téléviseurs 4 par des lignes respectives de type lignes d'abonné numérique à débit asymétrique, encore nommées ADSL (en anglais, « Asymmetric Digital Subscriber Line »).

Dans un mode de réalisation, un opérateur TV reçoit des programmes de n chaînes TV différentes CH1 à CHn. Chaque programme de la chaîne CHi, i=1 à n, est codé, par exemple conformément à la norme MPEG-4, sous forme de flux de type SPTS (en anglais « Single Transport Stream »). Un flux de données SPTS, par exemple correspondant à un débit de 2,2 Mb/s, comporte les données codées définissant le signal vidéo d'un programme et les différents signaux audio et est destiné à être visualisés en plein écran sur un téléviseur.

Dans ce qui suit, le flux SPTS déterminé pour le programme de la chaine Chi est référencé SPTSi, i=1 à n.

Par exemple n est égal à 50.

Dans le mode de réalisation considéré, l'opérateur détermine en outre n signaux vidéo représentant, en format réduit (par exemple égal au 1/N), les programmes des n différentes chaînes. Ces signaux vidéo sont destinés à être visualisés au sein d'un élément mosaïque d'une mosaïque TV.

Ces n signaux vidéo sont également codés sous forme de n SPTS par l'opérateur. Le SPTS correspondant au format réduit du programme de la chaîne CHi, i=1 à n, est référencé SPTS'i. Le débit d'un tel flux SPTS'i est par exemple de 200 Kb/s.

Puis les différents SPTS, correspondant aux programmes des chaînes (SPTSi, i=1 à n) et aux signaux vidéo des éléments mosaïques (SPTS'i, i=1 à n), sont multiplexés, puis transportés sur le réseau 2 à destination des équipements DSLAM 3.

Les équipements DSLAM 3 recevant les multiplex de SPTS des différents opérateurs, effectuent un démultiplexage et obtiennent les différents SPTS, en vue de leur fourniture aux téléviseurs 4 qui leur sont reliés pour affichage des programmes sélectionnés par les utilisateurs des téléviseurs 4.

En référence à la figure 2, un téléviseur 4 comporte un récepteur TV 5 relié à un dispositif d'affichage 6, qui peuvent être intégrés ou non. Dans ce dernier cas, le récepteur TV est par exemple une « set-top-box ».

Le récepteur TV 5 comporte une interface 9 adaptée pour échanger des données avec l'équipement DSLAM 3 auquel est relié le téléviseur 4. Il comporte en outre un module de traitement 8 adapté pour définir des données de définition d'écran, en vue de leur transmission au dispositif d'affichage 6pour affichage de l'écran ainsi défini.

Le module de traitement 8 comporte entre autres une application graphique et une mémoire (non représentés).

Une interface de commande 7 telle qu'une télécommande, par exemple à infrarouges, est adaptée pour transmettre au récepteur TV 5 des commandes saisies par l'utilisateur du téléviseur 4 à l'aide des touches de la télécommande. Parmi ces touches figurent par exemple les touches « menu », « OK », flèches « sens gauche »/ « sens droite »/ « sens montant »/ « sens descendant », chiffres « 0 » à « 9 » etc.

Par exemple, lorsque l'utilisateur appuie sur la touche « 2 » de la télécommande 7, la télécommande transmet au récepteur TV 5 la commande correspondante. Le module de traitement 8 envoie alors, via l'interface 9, une commande à destination de l'équipement DSLAM 3, requérant la fourniture du SPTS (SPTS2) correspondant au programme de la chaîne CH2. En réponse, l'équipement DSLAM 3 transmet le SPTS 2 en cours de diffusion au module de traitement 8 du téléviseur 4. Les données reçues sont alors décodées, puis fournies au dispositif d'affichage pour l'affichage en plein écran du programme de la chaîne CH2.

Dans un mode de réalisation, lorsque l'utilisateur appuie sur la touche « menu », le module 8 de traitement détermine alors à l'aide de l'application graphique dont il est muni et de données en mémoire, des données de définition d'un écran E0 affichant entre autres un champ « création nouvelle mosaïque » et d'un curseur positionné sur cet écran, puis transmet ces données de définition au dispositif d'affichage 6.

Le curseur consiste par exemple en une flèche pointant un élément à sélectionner ou encore en une mise en valeur (en anglais « highlight ») de l'élément à sélectionner.

Une fois l'écran E0 affiché par le dispositif d'affichage 6, l'utilisateur peut déplacer le curseur affiché à l'aide des touches « flèches » de la télécommande 7. Suite à un appui sur une touche « flèche » dans un sens donné, la télécommande 7 envoie une commande correspondante au module de traitement 8, qui à l'aide de l'application graphique et des données de définition de l'écran en cours d'affichage, définit un nouvel écran dans lequel le curseur s'est déplacé dans une direction conforme à la commande reçue. Puis les données de définition de ce nouvel écran sont transmises pour affichage, à la place de l'écran précédent, au dispositif d'affichage 6.

Si, à l'aide des touches « flèches » de la télécommande 7, l'utilisateur positionne le curseur sur le champ « création nouvelle mosaïque », puis sélectionne ce champ (par exemple en appuyant sur la touche « OK » de la télécommande) à l'aide de la télécommande 7, alors le module de commande 8 définit un écran représentant un clavier alphanumérique, un curseur, un champ vide, un champ invitant l'utilisateur à indiquer à l'aide de la télécommande 7, le nom de sauvegarde de la nouvelle mosaïque et un champ « sauvegarder ».

Dans le cas considéré, l'utilisateur va ainsi sélectionner un à un sur l'écran affiché, à l'aide des touches de la télécommande, les caractères de l'expression « Ma Mosaïque », puis valider le nom ainsi indiqué, en sélectionnant le champ « sauvegarder ». Le nom de sauvegarde de la nouvelle mosaïque est mémorisé dans la mémoire du module de traitement 8.

Dans un autre mode de réalisation, un nom de sauvegarde d'une nouvelle mosaïque en cours de création est proposé par défaut dans un champ apparaissant sur l'écran et rempli par un nom prédéterminé (tel que « mosaïque personnelle n° X », où X est un chiffre ou une lettre incrémenté(e) à chaque nouvelle création) invitant l'utilisateur à valider ou modifier le nom de sauvegarde proposé pour la nouvelle mosaïque.

Dans un autre mode de réalisation, il n'est pas laissé de possibilité de saisie de nom de sauvegarde à l'utilisateur. Le nom de sauvegarde est attribué obligatoirement par le récepteur 5 (par exemple par agrégation de l'acronyme de l'utilisateur et de la date de création de la nouvelle mosaïque).

Dans un mode de réalisation, le nom de sauvegarde est attribué, non avant la création, mais après la création de la mosaïque, permettant ainsi de créer une nouvelle mosaïque en modifiant une ancienne mosaïque sauvegardée.

En outre, dans le cas considéré, le module de traitement 8 est adapté pour transmettre à l'équipement DSLAM 3, une commande requérant une liste des identifiants des chaînes transmises à l'équipement DSLAM 3 et auxquelles l'utilisateur du téléviseur 4 a droit. En réponse, l'équipement DSLAM 3 transmet au module de traitement 8 la liste des k identifiants de chaînes (k inférieur ou égal à n) auquel l'utilisateur du téléviseur 4 a droit. On suppose dans ce qui suit que l'utilisateur du téléviseur 4 a les droits pour les k chaînes CH1 à CHk. Dans le mode de réalisation considéré, un écran E1 est ensuite affiché par le dispositif d'affichage 6, suite à la fourniture des données de définition de l'écran E1 déterminées par le module de traitement 8 à l'aide de données stockées en mémoire et de l'application graphique.

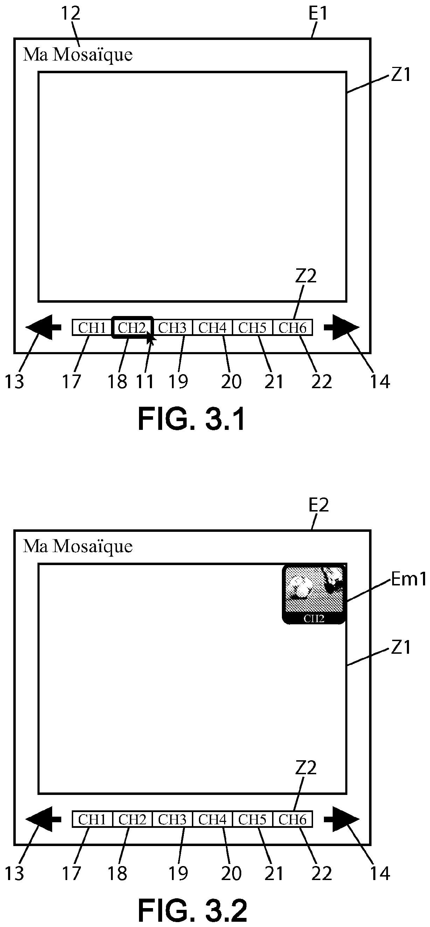

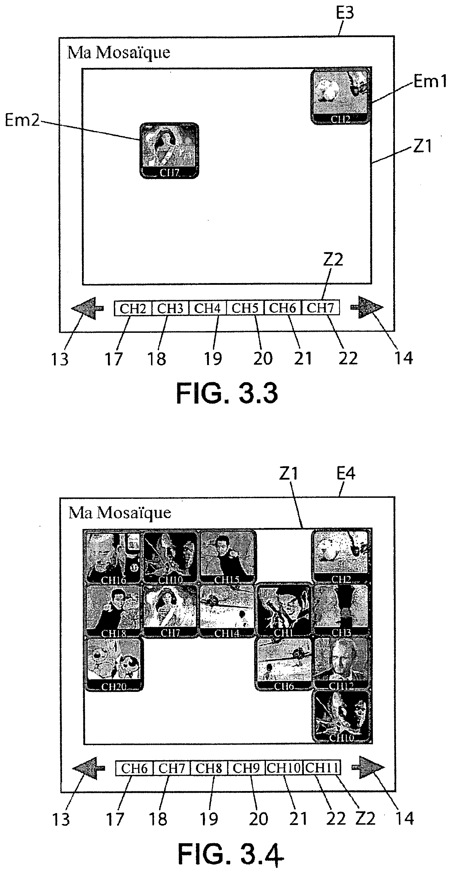

En référence à la figure 3.1, l'écran E1 comprend un curseur 11, un champ 12 indiquant le nom « Ma Mosaïque » de la nouvelle mosaïque, une première zone Z1 destinée à l'affichage d'une mosaïque et une deuxième zone Z2 comportant une liste d'identifiants de programmes.

La zone Z1 ici représentée comprend au plus N éléments mosaïques. Par exemple dans le cas représentée, elle peut comprendre jusqu'à 20 éléments mosaïques disposés selon 4 lignes de chacune 5 éléments mosaïques.

La zone Z2 comprend une portion d'une liste déroulante. La zone Z2 comporte des champs 17, 18, 19, 20, 21 et 22, indiquant, dans le cas considéré les identifiants respectifs CH1 à CH6.

Dans le cas considéré, à l'aide des touches « flèches » de la télécommande 7, l'utilisateur positionne le curseur 11 sur le champ 18 comportant l'identifiant de la chaîne CH2, puis sélectionne ce champ (par exemple en appuyant sur la touche « OK » de la télécommande 7) à l'aide de la télécommande 7. En référence à la figure 3.1, le contour du champ 18 sélectionné apparaît en gras.

Lorsque le module de traitement 8 reçoit cette commande indiquant la sélection de l'identifiant de la chaîne CH2, il émet alors, via l'interface 9, une commande à destination de l'équipement DSLAM 3, requérant la fourniture du signal vidéo SPTS (SPTS'2) correspondant au format réduit du programme de la chaîne CH2. En réponse, l'équipement DSLAM 3 transmet le SPTS'2 au module de traitement 8. Les données reçues sont alors décodées par le module de traitement 8.

Une fois le champ 18 comportant l'identifiant de la chaîne CH2 sélectionné, l'utilisateur, toujours à l'aide des touches « flèches » de la télécommande 7, commande un déplacement à appliquer à une représentation de l'identifiant de la chaîne CH2 depuis sa position dans la liste Z2 jusqu'à un emplacement désiré dans la zone Z1. Chaque nouvel appui sur une touche « flèche » est une commande reçue par le module de traitement 8, qui définit alors, à l'aide de l'application graphique et des données de définition de l'écran en cours d'affichage, un nouvel écran dans lequel s'est déplacée une représentation de l'identifiant de la chaîne CH2 dans une direction conforme à la commande reçue. Puis les données de définition de ce nouvel écran sont transmises pour affichage, à la place de l'écran précédent, au dispositif d'affichage 6.

Une fois que l'emplacement désiré dans la zone Z2 est atteint par la représentation de l'identifiant de la chaîne CH2, l'utilisateur indique que le déplacement est terminé, par exemple en appuyant sur la touche « OK » de la télécommande. Dans le cas considéré, l'emplacement désiré correspondant à la dernière position (sur les N positions) sur la première ligne.

Lorsque le module de traitement 8 reçoit cette commande indiquant la localisation souhaitée par l'utilisateur pour l'emplacement de l'élément mosaïque affichant le programme de la chaîne CH2 sélectionnée, il définit alors à l'aide de l'application graphique, des données de définition de l'écran courant affiché et des données décodées issues du SPTS'2, un nouvel écran E2 représenté en figure 3.2. Cet écran E2 comporte, en plus de l'écran précédemment affiché, un élément mosaïque Em1 situé à l'emplacement indiqué par l'utilisateur affichant en format réduit le programme de la chaîne CH2. Puis le module de traitement 8 transmet ces données de définition de l'écran E2 au dispositif d'affichage 6, qui affiche alors cet écran à la place de l'écran précédemment affiché.

Dans le mode de réalisation considéré en référence aux figures 3.1 et 3.2, les écrans comportant la zone Z1 pour l'affichage des éléments mosaïques et la zone Z2 d'affichage d'identifiants de programmes comportent en outre un champ 13 sur la gauche de la liste Z2 représentant une flèche en direction de la gauche et un champ 14 sur la droite de la liste Z2 représentant une flèche en direction de la droite.

Lorsque l'utilisateur positionne le curseur 11 sur une des flèches 13, 14 et sélectionne ladite flèche, les identifiants de chaînes indiqués par les champs de la zone Z2 sont décalés d'un champ.

Par exemple, si l'utilisateur sélectionne en référence à la figure 3.2, la flèche 14, alors le contenu des champs 17 à 22 est modifié comme représenté en figure 3.3 : le champ 21 indique alors l'identifiant de la chaîne CH6, le champ 20 celui de la chaîne CH5, le champ 19 celui de la chaîne CH4, le champ 18 celui de la chaîne CH3, le champ 17 celui de la chaîne CH2. Et le champ 22 indique l'identifiant de la chaîne CH7.

Si l'utilisateur avait sélectionné, en référence à la figure 3.2, la flèche 13, alors le contenu des champs 17 à 22 aurait été modifié de la manière suivante : le champ 22 indiquerait l'identifiant de la chaîne CH5, le champ 21 indiquerait l'identifiant de la chaîne CH4, le champ 20 celui de la chaîne CH3, le champ 19 celui de la chaîne CH2, le champ 18 celui de la chaîne CH1, le champ 17 celui de la chaîne CHk.

Ainsi, dans les deux cas, la sélection d'une flèche 13 ou 14 donne lieu à la suppression d'un identifiant de chaîne TV précédemment affiché à une extrémité de la liste des identifiants affichée dans la zone Z2 et à l'affichage à l'autre extrémité de la liste d'un identifiant qui n'était pas précédemment affiché.

Un tel accès, à l'aide d'une liste déroulante, depuis l'écran présentant la mosaïque à l'ensemble des programmes des chaînes CH1 à CHk auxquels a droit l'utilisateur, lui permet d'insérer l'élément mosaïque correspondant à toute chaîne TV de son choix, tout en gardant également à l'écran la mosaïque en cours de constitution.

En réitérant des opérations similaires à celles décrites ci-dessus pour insérer l'élément mosaïque Em1 correspondant au programme, en format réduit, de la chaîne CH2, l'utilisateur peut ajouter plusieurs éléments mosaïques à des emplacements souhaités au sein de la zone Z2. Par exemple, en référence à la figure 3.3, l'élément mosaïque Em2 correspondant au programme, en format réduit, de la chaîne CH7 a été ajouté dans la mosaïque « Ma Mosaïque » de la zone Z1 de l'écran E3.

Dans un mode de réalisation, l'utilisateur peut en outre déplacer un ou des éléments mosaïques insérés dans sa mosaïque.

A cet effet, à l'aide du curseur 11 et des touches de la télécommande 7, l'utilisateur sélectionne celui des éléments mosaïques présents qu'il souhaite déplacer, par exemple l'élément mosaïque Em1, par exemple en appuyant sur la touche « OK » de la télécommande 7, une fois le curseur 11 positionné sur l'élément mosaïque.

Puis à l'aide des touches « flèches » de la télécommande 7, l'utilisateur commande un déplacement à appliquer à l'élément mosaïque Em1 depuis sa position initiale jusqu'à un autre emplacement désiré dans la zone Z1. Chaque nouvel appui sur une touche « flèche » est une commande reçue par le module de traitement 8, qui définit alors à l'aide de l'application graphique et des données de définition de l'écran en cours d'affichage, un nouvel écran dans lequel s'est déplacé l'élément mosaïque Em1 dans une direction conforme à la commande reçue. Puis les données de définition de ce nouvel écran sont transmises pour affichage, à la place de l'écran précédent, au dispositif d'affichage 6.

Une fois que le curseur 11 atteint l'autre emplacement désiré dans la zone Z1, l'utilisateur indique que le déplacement est terminé, par exemple en appuyant sur la touche « OK » de la télécommande. Lorsque le module de traitement 8 reçoit cette commande indiquant la localisation souhaitée par l'utilisateur pour le nouvel emplacement de l'élément mosaïque Em1, il définit alors à l'aide de l'application graphique, des données de définition de l'écran courant affiché et des données décodées issues du SPTS'2, un nouvel écran tel que l'élément mosaïque Em1 figure à présent au nouvel emplacement dans la zone Z1 et non plus à l'emplacement initial correspondant à la Nième position sur la première ligne.

L'utilisateur a en outre la possibilité de supprimer un élément mosaïque présent dans la zone Z1. Dans un mode de réalisation, il lui suffit, pour ce faire, à l'aide du curseur 11 et des touches de la télécommande 7, de sélectionner celui des éléments mosaïques présents qu'il souhaite supprimer, par exemple en appuyant sur la touche « OK » de la télécommande 7, une fois le curseur 11 positionné sur l'élément mosaïque.

Puis à l'aide des touches « flèches » de la télécommande 7, l'utilisateur commande un déplacement à appliquer à l'élément mosaïque sélectionné depuis sa position initiale jusqu'à un emplacement quelconque hors de la zone Z1. Chaque nouvel appui sur une touche « flèche » est une commande reçue par le module de traitement 8, qui définit alors à l'aide de l'application graphique et des données de définition de l'écran en cours d'affichage, un nouvel écran dans lequel s'est déplacé l'élément mosaïque dans une direction conforme à la commande reçue. Puis les données de définition de ce nouvel écran sont transmises pour affichage, à la place de l'écran précédent, au dispositif d'affichage 6.

Une fois que le curseur 11 atteint un emplacement en-dehors de la zone Z1, l'utilisateur indique que le déplacement est terminé, par exemple en appuyant sur la touche « OK » de la télécommande.

Lorsque le module de traitement 8 reçoit cette commande indiquant la localisation souhaitée par l'utilisateur pour l'emplacement de l'élément mosaïque affichant le programme de la chaîne CH2 sélectionnée, il définit alors à l'aide de l'application graphique, des données de définition de l'écran courant affiché et des données décodées issues du SPTS'2, un nouvel écran tel que l'élément mosaïque sélectionné est supprimé.

D'autres procédures peuvent être définies pour supprimer un élément mosaïque (par exemple, par appui d'une touche déterminée de la télécommande 7 après sélection de l'élément mosaïque).

La présente invention permet ainsi de personnaliser, par un utilisateur d'un téléviseur, de manière simple et rapide, une mosaïque en incluant des éléments mosaïques pour des programmes sélectionnés par l'utilisateur.

La personnalisation de la mosaïque est aisée à mettre en oeuvre, l'utilisateur visualisant sur un même écran la mosaïque en cours de constitution et une liste de programmes disponibles. Ainsi l'utilisateur n'a pas besoin de naviguer d'un écran à un autre pour définir sa mosaïque. Dès qu'il saisit depuis sa télécommande une commande de sélection d'un identifiant d'un programme dans la deuxième zone de l'écran, de suppression ou de déplacement d'un élément mosaïque dans la première zone mosaïque sur la base d'un écran affiché, l'utilisateur peut visualiser le résultat de sa commande sur l'écran alors affiché par le dispositif d'affichage.

Ci-dessous a été décrite la génération d'un écran comportant une page mosaïque. Dans un mode de réalisation, l'utilisateur a la possibilité de créer plusieurs pages mosaïques, par exemple une mosaïque destinée aux enfants, une mosaïque destinée aux programmes qu'il aime regarder en soirée etc. Ces pages mosaïques sont par exemple destinées à être affichées sur des écrans différents. Dans un tel cas, l'écran E0 comporte, outre le champ « création nouvelle mosaïque », des champs comportant chacun le nom d'une mosaïque déjà créée. Suite à la sélection d'un des champs comportant le nom d'une mosaïque déjà créée, un écran comportant une première zone avec les éléments mosaïques déjà définis pour cette mosaïque et une deuxième zone avec les programmes disponibles est affiché. Les mêmes opérations que celles décrites ci-dessus en référence à la mosaïque « Ma Mosaïque » peuvent alors être menées.

Dans un mode de réalisation, l'écran E0, tel que présenté initialement à un utilisateur souhaitant créer une mosaïque, comporte des éléments mosaïques affichant des programmes de chaînes prédéfinis par l'opérateur. Par exemple, le module de traitement est adapté pour inclure des éléments mosaïques correspondant aux chaînes CH1 et CH2, les N-2 autres éléments mosaïques étant sélectionnables par l'utilisateur.

Dans le mode de réalisation décrit ci-dessus, l'utilisateur choisit non seulement tous ou certains des flux présentés dans la mosaïque, mais également l'emplacement des éléments mosaïques relatifs à ces flux choisis. Dans un autre mode de réalisation, l'utilisateur choisit les flux présentés dans la mosaïque, mais pas leur emplacement.

Dans le mode de réalisation décrit ci-dessus en référence aux figures, la liste d'identifiants est une liste déroulante dont une portion est affichée dans la zone Z2. Dans un autre mode de réalisation, la liste d'identifiants est une liste hiérarchisée. S'il s'agit par exemple d'une liste hiérarchisée par thèmes, le premier niveau de hiérarchie de la liste apparaissant d'abord dans la zone Z2 présente par exemple les thèmes suivants : « série », « film », « sport » etc. Si l'utilisateur sélectionné à l'aide du curseur dans la zone Z2 le thème « série », un deuxième niveau de hiérarchie de la liste affiché alors présente la liste des identifiants des flux identifiés sous ce thème. S'il s'agit par exemple d'une liste hiérarchisée par statistique, le premier niveau de hiérarchie apparaissant d'abord dans la zone Z2 présente par exemple les catégories statistiques suivantes : « <30% », « 30-70% », « >70% » relatives à la fréquence d'utilisation des contenus par l'utilisateur. Si l'utilisateur sélectionne la catégorie « >70% », un deuxième niveau de hiérarchie de la liste affiché alors présente la liste des identifiants des contenus dont la fréquence d'utilisation par l'utilisateur est supérieure à 70%.

Dans ce qui précède, l'invention est décrite dans une application à un réseau de diffusion de programmes TV de type ADSL. Néanmoins, l'invention peut être mise en oeuvre dans tout environnement de diffusion de programmes TV, radio ou multimédia, par exemple par satellite ou réseau numérique hertzien.

Dans un mode de réalisation, le téléviseur 4 est adapté pour recevoir des chaînes depuis des opérateurs différents via un même équipement 3 ou via des équipements 3 respectifs. Le module de traitement 8 est alors adapté pour recueillir auprès des équipements 3 les identifiants de programmes respectivement transmis par les opérateurs, pour fusionner au sein d'une seule liste, destinée à l'affichage dans la zone Z2, ces identifiants et ainsi permettre à un utilisateur de créer une mosaïque comportant des éléments mosaïques correspondant à des chaînes d'opérateurs distincts.

Dans un mode de réalisation, la liste des identifiants des flux transmises au récepteur 5 comprend les identifiants des flux auxquels l'utilisateur du téléviseur 4 a droit ainsi que certains au moins des flux auxquels il n'a pas droit, tels qu'un flux de télévision payante (en anglais « payTV »), pour lequel l'achat de l'accès au contenu diffusé est possible. Si lors de la visualisation de la mosaïque comportant un élément mosaïque relatif à ce flux, l'utilisateur constate que le contenu diffusé par cette télévision payante l'intéresse, il pourra acheter l'accès à ce contenu. L'achat de l'accès à ce contenu est réalisé soit directement depuis la mosaïque, par simple sélection de l'élément mosaïque relatif à la télévision payante, ce qui entraînera l'affichage d'un écran d'achat, puis une fois la transaction effectuée, l'affichage du flux du contenu acheté, soit indirectement par Internet ou téléphone permettant une fois la transaction achevée, d'accéder au contenu de la télévision payante.

Dans un mode de réalisation, le récepteur TV 5 est adapté pour recevoir des flux transportant des contenus de diverses sources (par exemple, une source de flux est transportée sur ADSL, une autre source par voie hertzienne) et la liste des identifiants des flux proposée par le récepteur TV 5 lors de la création d'une mosaïque comprend les identifiants de flux de contenus transmis par les diverses sources.

Dans un mode de réalisation, des flux de contenus autres que des programmes TV sur voie ADSL ou hertzienne sont transmis au récepteur TV 5, par exemple des flux de contenus sur voie IP (contenus de TV IP ou de radio IP), la liste des identifiants de flux proposée dans la zone Z2 propose alors les identifiants de tels flux de contenus.

Dans le mode de réalisation décrit ci-dessus, les flux vidéo sont requis par le récepteur TV auprès de l'équipement 3 au fur et à mesure de commandes correspondantes de l'utilisateur. Dans un autre mode de réalisation, l'ensemble des flux SPTS sont envoyés en permanence au récepteur TV.

Dans un mode de réalisation, tout ou partie des étapes effectuées par le module de traitement 8 sont mises en oeuvre lors d'une exécution, par des moyens de traitement du module de traitement 8, d'un programme comprenant des instructions pour mettre en oeuvre ces étapes. Ce programme est basé par exemple sur les technologies HTML et Javascript.

Le mode de réalisation décrit en référence aux figures considère un tableau d'éléments mosaïques carrés ou rectangles. L'invention peut bien sûr être mise en oeuvre avec des mosaïques présentant des formes autres et/ou des éléments mosaïques de formes autres : par exemple, une mosaïque en disposition « fleur » avec des éléments mosaïques en forme de pétales ou de demi-cercles (le centre de la fleur permettant notamment de présenter en mode zoom avant l'élément mosaïque sur lequel se trouve le curseur), ou des éléments mosaïques de forme parallélogramme disposés en diagonale etc.

## Revendications

1. Procédé de génération d'au moins une mosaïque de flux transportant des contenus, **caractérisé en ce que** ledit procédé comprend les étapes suivantes, suite à l'affichage d'un écran comprenant au moins une première zone (Z1) destinée à l'affichage d'une mosaïque et une deuxième zone (Z2) comportant une liste d'identifiants de contenus :
a/ détecter une commande de sélection d'un identifiant de la liste en provenance d'une interface de commande d'un utilisateur ;
b/ modifier la définition de l'écran (E2) en ajoutant un élément mosaïque (Em1) présentant le flux représentant le contenu identifié par l'identifiant sélectionné dans la première zone (Z1) ;
c/ transmettre les données de définition de l'écran au dispositif d'affichage pour affichage de l'écran modifié.

2. Procédé selon la revendication 1 selon lequel, la commande indiquant en outre un emplacement déterminé dans la première zone, la définition de l'écran est modifiée en ajoutant un élément mosaïque (Em1) dans la première zone, présentant le flux représentant le contenu identifié par l'identifiant sélectionné à l'emplacement indiqué.

3. Procédé selon la revendication 1 ou 2, selon lequel, la commande indiquant en outre un déplacement depuis l'identifiant sélectionné dans la liste jusqu'à un emplacement déterminé dans la première zone (Z1) :
- la définition de l'écran est modifiée successivement en ajoutant une représentation de l'identifiant sélectionné et en la déplaçant en des positions respectives successives le long du déplacement indiqué; et les données de définition de l'écran sont transmises au dispositif d'affichage (6) pour affichage de l'écran successivement modifié.

4. Procédé selon l'une des revendications précédentes, selon lequel on détermine, parmi les contenus, ceux autorisés à être visualisés et selon lequel les identifiants de la liste (Z2) à afficher dans la deuxième zone sont les identifiants de contenus déterminés.

5. Procédé selon l'une des revendications précédentes, selon lequel, suite à la détection d'au moins une commande en provenance de l'interface de commande (7) indiquant un défilement dans un sens donné de la liste d'identifiants :
- la définition de l'écran est modifiée en supprimant au moins un identifiant de contenu précédemment affiché à une extrémité de la liste dans la deuxième zone (Z2) et en ajoutant au moins un identifiant de contenu non précédemment affiché dans la liste à une autre extrémité de la liste ; et
- les données de définition de l'écran sont transmises au dispositif d'affichage pour affichage de l'écran modifié.

6. Procédé selon l'une des revendications précédentes, comprenant en outre les étapes suivantes :
- détecter une commande, en provenance de l'interface de commande (7), sélectionnant un élément mosaïque situé à un premier emplacement déterminé dans la première zone (Z1) et indiquant un déplacement depuis le premier emplacement jusqu'à un second emplacement dans la première zone ;
- modifier successivement la définition de l'écran en déplaçant l'élément mosaïque sélectionné en des positions respectives successives de le long du déplacement indiqué ; et
- transmettre les données de définition de l'écran au dispositif d'affichage (6) pour affichage de l'écran successivement modifié.

7. Programme d'ordinateur à installer dans un module (5) apte à recevoir des flux transportant des contenus, apte à recevoir des commandes transmises depuis une interface de commande (7) et apte à envoyer des données de définition d'écran à un dispositif d'affichage (6) pour affichage de l'écran ainsi défini, ledit programme comprenant des instructions pour mettre en oeuvre les étapes d'un procédé selon l'une des revendications précédentes lors d'une exécution du programme par des moyens de traitement dudit module.

8. Module (5) apte à recevoir des flux transportant des contenus, apte à recevoir des commandes transmises depuis une interface de commande (7) et apte à envoyer des données de définition d'écran à un dispositif d'affichage (6) pour affichage dudit écran, ledit module étant adapté pour mettre en oeuvre les étapes d'un procédé selon l'une des revendications 1 à 6.

9. Récepteur télévisuel (5) comprenant un module selon la revendication 8.

10. Données de définition d'écran (E1, E2, E3) destiné à l'affichage sur un dispositif d'affichage (6), comprenant au moins une première zone (Z1) destinée à l'affichage d'une mosaïque de flux transportant des contenus et une deuxième zone (Z2) comportant une liste d'identifiants de contenus, lesdites données de définition d'écran étant obtenues suite à la mise en oeuvre d'un procédé selon l'une des revendications 1 à 6.

## Patentansprüche

1. Verfahren zur Erzeugung mindestens eines Mosaiks von Inhalte transportierenden Strömen, **dadurch gekennzeichnet, dass** das Verfahren die folgenden Schritte nach der Anzeige eines Bildschirms enthält, der mindestens eine erste Zone (Z1), die zur Anzeige eines Mosaiks bestimmt ist, und eine zweite Zone (Z2) enthält, die eine Liste von Inhaltskennungen aufweist:
a/ Erfassen eines Auswahlbefehls einer Kennung der Liste, der von einer Befehlsschnittstelle eines Benutzers kommt;
b/ Ändern der Definition des Bildschirms (E2) durch Hinzufügen eines Mosaikelements (Em1), das den Strom präsentiert, der den von der in der ersten Zone (Z1) ausgewählten Kennung identifizierten Inhalt darstellt;
c/ Übertragen der Definitionsdaten des Bildschirms an die Anzeigevorrichtung zur Anzeige des veränderten Bildschirms.

2. Verfahren nach Anspruch 1, wobei, da der Befehl außerdem eine bestimmte Stelle in der erste Zone angibt, die Definition des Bildschirms verändert wird, indem ein Mosaikelement (Em1) in der ersten Zone hinzugefügt wird, das den Strom präsentiert, der den von der ausgewählten Kennung an der angegebenen Stelle identifizierten Inhalt darstellt.

3. Verfahren nach Anspruch 1 oder 2, wobei, da der Befehl außerdem eine Verschiebung von der in der Liste ausgewählten Kennung bis zu einer bestimmten Stelle in der ersten Zone (Z1) angibt:
- die Definition des Bildschirms nacheinander verändert wird, indem eine Darstellung der ausgewählten Kennung hinzugefügt wird und indem sie an jeweilige aufeinanderfolgende Stellungen entlang der angegebenen Verschiebung verschoben wird; und die Definitionsdaten des Bildschirms an die Anzeigevorrichtung (6) zur Anzeige des nacheinander veränderten Bildschirms übertragen werden.

4. Verfahren nach einem der vorhergehenden Ansprüche, wobei unter den Inhalten diejenigen bestimmt werden, die berechtigt sind, dargestellt zu werden, und wobei die in der zweiten Zone anzuzeigenden Kennungen der Liste (Z2) die Kennungen von bestimmten Inhalten sind.

5. Verfahren nach einem der vorhergehenden Ansprüche, wobei nach der Erfassung mindestens eines von der Befehlsschnittstelle (7) kommenden Befehls, der einen Vorbeilauf der Liste von Kennungen in einer gegebenen Richtung angibt:
- die Definition des Bildschirms verändert wird, indem mindestens eine vorher an einem Ende der Liste in der zweiten Zone (Z2) angezeigte Inhaltskennung gelöscht und mindestens eine vorher nicht in der Liste angezeigte Inhaltskennung an einem anderen Ende der Liste hinzugefügt wird; und
- die Definitionsdaten des Bildschirms an die Anzeigevorrichtung zur Anzeige des veränderten Bildschirms übertragen werden.

6. Verfahren nach einem der vorhergehenden Ansprüche, das außerdem die folgenden Schritte enthält:
- Erfassen eines von der Befehlsschnittstelle (7) kommenden Befehls, der ein Mosaikelement auswählt, das sich an einer ersten bestimmten Stelle in der ersten Zone (Z1) befindet, und eine Verschiebung von der ersten Stelle bis zu einer zweiten Stelle in der ersten Zone angibt;
- nacheinander Verändern der Definition des Bildschirms durch Verschieben des ausgewählten Mosaikelements in aufeinanderfolgende jeweilige Stellungen entlang der angegebenen Verschiebung; und
- Übertragen der Definitionsdaten des Bildschirms an die Anzeigevorrichtung (6) zur Anzeige des nacheinander veränderten Bildschirms.

7. Computerprogramm, das in ein Modul (5) einzubauen ist, das Inhalte transportierende Ströme empfangen kann, das von einer Befehlsschnittstelle (7) übertragene Befehle empfangen kann, und das Bildschirm-Definitionsdaten an eine Anzeigevorrichtung (6) zur Anzeige des so definierten Bildschirms schicken kann, wobei das Programm Anweisungen enthält, um die Schritte eines Verfahrens nach einem der vorhergehenden Ansprüche bei einer Ausführung des Programms durch Verarbeitungseinrichtungen des Moduls durchzuführen.

8. Modul (5), das Inhalte transportierende Ströme empfangen kann, das von einer Befehlsschnittstelle (7) übertragene Befehle empfangen kann, und das Bildschirm-Definitionsdaten an eine Anzeigevorrichtung (6) zur Anzeige des Bildschirms schicken kann, wobei das Modul geeignet ist, die Schritte eines Verfahrens nach einem der Ansprüche 1 bis 6 durchzuführen.

9. Fernsehempfänger (5), der ein Modul nach Anspruch 8 enthält.

10. Definitionsdaten eines Bildschirms (E1, E2, E3), der für die Anzeige auf einer Anzeigevorrichtung (6) bestimmt ist, die mindestens eine erste Zone (Z1), die für die Anzeige eines Mosaiks von Inhalte transportierenden Strömen bestimmt ist, und eine zweite Zone (Z2) enthält, die eine Liste von Inhaltskennungen aufweist, wobei die Bildschirm-Definitionsdaten nach der Durchführung eines Verfahrens nach einem der Ansprüche 1 bis 6 erhalten werden.

## Claims

1. Method for generating at least one mosaic of streams transporting content, **characterized in that** said method comprises the following steps, following the displaying of a screen comprising at least a first zone (Z1) intended for the displaying of a mosaic and a second zone (Z2) including a list of content identifiers:
a/ detecting a command to select an identifier from the list, originating from a control interface of a user;
b/ modifying the definition of the screen (E2) by adding a mosaic element (Em1) depicting the stream showing the content identified by the selected identifier in the first zone (Z1);
c/ transmitting the data defining the screen to the display device so as to display the modified screen.

2. Method according to Claim 1, wherein, with the command furthermore indicating a given location in the first zone, the definition of the screen is modified by adding a mosaic element (Em1) into the first zone, depicting the stream showing the content identified by the selected identifier at the indicated location.

3. Method according to Claim 1 or 2, wherein, with the command furthermore indicating a movement from the identifier selected from the list to a given location in the first zone (Z1):
- the definition of the screen is successively modified by adding a depiction of the selected identifier and by moving it into respective successive positions along the indicated movement; and the data defining the screen are transmitted to the display device (6) so as to display the successively modified screen.

4. Method according to one of the preceding claims, wherein there is determined, from among the content, that content that is permitted to be viewed, and wherein the identifiers from the list (Z2) to be displayed in the second zone are the identifiers of determined content.

5. Method according to one of the preceding claims, wherein, following the detection of at least one command originating from the control interface (7) and indicating scrolling of the list of identifiers in a given direction:
- the definition of the screen is modified by deleting at least one content identifier previously displayed at one end of the list in the second zone (Z2) and by adding at least one content identifier not previously displayed in the list at another end of the list; and
- the data defining the screen are transmitted to the display device so as to display the modified screen.

6. Method according to one of the preceding claims, furthermore comprising the following steps:
- detecting a command, originating from the control interface (7), selecting a mosaic element situated at a first given location in the first zone (Z1) and indicating a movement from the first location to a second location in the first zone;
- successively modifying the definition of the screen by moving the selected mosaic element into respective successive positions along the indicated movement; and
- transmitting the data defining the screen to the display device (6) so as to display the successively modified screen.

7. Computer program for installation in a module (5) able to receive streams transporting content, able to receive commands transmitted from a control interface (7) and able to send screen definition data to a display device (6) so as to display the screen thus defined, said program comprising instructions for implementing the steps of a method according to one of the preceding claims when the program is executed by processing means of said module.

8. Module (5) able to receive streams transporting content, able to receive commands transmitted from a control interface (7) and able to send screen definition data to a display device (6) so as to display said screen, said module being designed to implement the steps of a method according to one of Claims 1 to 6.

9. Television receiver (5) comprising a module according to Claim 8.

10. Data for defining a screen (E1, E2, E3) intended for display on a display device (6), comprising at least a first zone (Z1) intended for the displaying of a mosaic of streams transporting content and a second zone (Z2) including a list of content identifiers, said screen definition data being acquired following the implementation of a method according to one of Claims 1 to 6.
